# EUROPÄISCHE PATENTSCHRIFT

(11) **EP 2 096 349 B1**
(45) Veröffentlichungstag und Bekanntmachung des Hinweises auf die Patenterteilung: **04.09.2013**
(21) Anmeldenummer: 09002355.7
(22) Anmeldetag: 19.02.2009
(51) Int. Cl.: F16M 11/08, F16M 13/02, F21S 8/00, F21V 21/02, F21V 21/26

(54) **Aufhängung for Operationsleuchte**
Support for surgical light
Suspension pour lampe d'opération

(30) Priorität: 26.02.2008 DE 102008011129
(43) Veröffentlichungstag der Anmeldung: 02.09.2009
(73) Patentinhaber: Berchtold Holding GmbH, 78532 Tuttlingen (DE)
(72) Erfinder: Gull, Kurt, 78532 Tuttlingen (DE); Mann, Dieter, 78582 Balgheim (DE)
(74) Vertreter: Manitz, Finsterwald & Partner GbR

(56) Entgegenhaltungen:
- EP-A1- 0 392 303
- DE-A1- 3 808 327
- DE-U1- 9 013 025
- US-A- 3 240 925

## Beschreibung

Die vorliegende Erfindung betrifft eine Aufhängung für ein Gerät, insbesondere eine Operationsleuchte.

Derartige Aufhängungen sind grundsätzlich bekannt und dienen dazu, das Gerät bzw. elektrische Gerät drehbar an der Decke oder an einem Stativ zu befestigen. Da ein elektrisches Gerät mit elektrischen Zuleitungen versehen ist, werden diese durch den Ausleger und durch ein Halteelement geführt, an dem der Ausleger drehbar befestigt ist. Problematisch ist hierbei, dass eine Drehung um mehr als 360° verhindert werden muss, da ansonsten die Gefahr besteht, dass die elektrischen Zuleitungen abreißen. Auch bei Geräten ohne elektrische Kabel kann es wünschenswert sein, den Schwenkbereich des Auslegers zu beschränken.

Aus der DE 90 13 025 U1 ist eine Aufhängung für ein Gerät bekannt, bei der ein Ausleger relativ zu einer Wandhalterung verdrehbar ist. Mit Hilfe zweier Anschlagscheiben ist ein verstellbarer Anschlag gebildet, mit dem die beiden Teile entweder relativ zueinander fixiert oder aber über einen vorbestimmten Winkelbereich relativ zueinander verschwenkbar eingestellt werden können. Zur Begrenzung der Schwenkbewegung ist an dem Ausleger und an der Wandhalterung jeweils ein Anschlag vorgesehen, der mit jeweils einem Anschlagansatz der Anschlagscheiben in Eingriff tritt.

Die EP 0 392 303 A1 offenbart eine Aufhängung für eine Operationsleuchte mit einem Halteelement, an dem zumindest ein Ausleger drehbar befestigt ist. Um die Drehbewegung des Auslegers einzuschränken, ist ein mit dem Halteelement verbundener Anschlagring vorgesehen.

Es ist die Aufgabe der Erfindung, eine Aufhängung für ein Gerät zu schaffen, die eine Verdrehsicherung aufweist und die konstruktiv einfach sowie kompakt aufgebaut ist.

Die Lösung dieser Aufgabe erfolgt durch die Merkmale des Anspruchs 1.

Durch das erfindungsgemäße Koppelelement ist also kein unmittelbarer Anschlag zwischen dem Ausleger und dem Halteelement vorgesehen, sondern die Verdrehsicherung erfolgt über das Koppelelement, das unabhängig von dem Ausleger um das Halteelement drehbar ist. Mit einem solchen Koppelelement lässt sich nicht nur eine gute Einstellung des Schwenkbereichs des Haltearms erzielen. Es wird darüber hinaus eine äußerst kompakte Bauweise ermöglicht, die sowohl konstruktiv wie auch herstellungstechnisch kostengünstig realisiert werden kann.

Ein Drehring lässt sich auf das Halteelement verdrehbar aufsetzen, so dass die unabhängige Verschwenkbarkeit von Ausleger und Drehring gewährleistet ist.

Da der Drehring an seinem Umfang mit einem Fenster versehen ist, in das der Anschlag des Halteelementes hineinragt, lässt sich der Drehring um das Halteelement drehen, wobei der Verdrehbereich der Umfangserstreckung des Fensters entspricht. Durch die überlappende Anordnung von Anschlag und Drehring wird die kompakte Bauweise weiter gefördert.

Vorteilhafte Ausführungsformen der Erfindung sind in der Beschreibung, der Zeichnung sowie den Unteransprüchen beschrieben.

Nach einer vorteilhaften Ausführungsform kann in dem Fenster zu beiden Seiten des in dieses hineinragenden Anschlags ein Stoßdämpfer vorgesehen sein, beispielsweise ein Körper aus elastischem Vollmaterial. Bei praktischen Versuchen hat sich nämlich herausgestellt, dass das Vorsehen eines Stoßdämpfers in dem Koppelelement die Übertragung von Stößen von dem Ausleger auf das Halteelement deutlich reduziert, wenn der Ausleger am Ende seines Schwenkbereichs angelangt ist.

Nach einer weiteren vorteilhaften Ausführungsform kann das Koppelelement ein positionsvariables Sperrelement aufweisen, über welches das Koppelelement mit dem Ausleger in Eingriff tritt. Beispielsweise kann das Koppelelement bzw. der Drehring über dessen Umfang gleichmäßig beabstandete Aufnahmen oder Bohrungen für das Sperrelement aufweisen. In diesem Fall lässt sich das Sperrelement, beispielsweise ein Schraubbolzen, in einer der Bohrungen einschrauben, die einem gewünschten Verschwenkbereich entspricht.

Nach einer weiteren vorteilhaften Ausführungsform kann der Ausleger ein das Halteelement umfassendes Gehäuse aufweisen, das mit Ausnahme einer Bohrung für eine Anschlagschraube vollständig geschlossen ist. Diese Ausführungsform besitzt den großen Vorteil, dass lediglich eine einzige Öffnung im Bereich des Gehäuses vorgesehen ist, was unter hygienischen Gesichtspunkten im Bereich eines Operationssaals eine große Rolle spielt, da sämtliche in einem Operationssaal befindlichen Geräte stets gereinigt werden müssen. Da jede Bohrung, Vertiefung oder Unebenheit eines Gerätes nur schlecht oder unter erhöhter Schwierigkeit zu reinigen ist, sind bei allen Geräten, die innerhalb eines Operationssaals eingesetzt werden, möglichst glatte Oberflächen bevorzugt.

Nach einer weiteren vorteilhaften Ausführungsform kann das Koppelelement, insbesondere der Drehring, vollständig in dem Gehäuse des Auslegers aufgenommen sein, welches das Halteelement, beispielsweise einen hohlen Schaft, umgibt. Bei dieser Ausführungsform ergibt sich eine äußerst kompakte Bauweise, bei der sämtliche für die Verdrehsicherung erforderliche Teile innerhalb des Gehäuses aufgenommen sind und bei der insbesondere nur eine einzige Sperrschraube aus dem Gehäuse nach außen austritt.

Nachfolgend wird die vorliegende Erfindung rein beispielhaft anhand einer vorteilhaften Ausführungsform und unter Bezugnahme auf die beigefügten Zeichnungen beschrieben. Es zeigen:
- Fig. 1: eine perspektivische Schnittdarstellung einer Aufhängung; und
- Fig. 2: eine perspektivische Ansicht eines Drehrings der Aufhängung von Fig. 1.

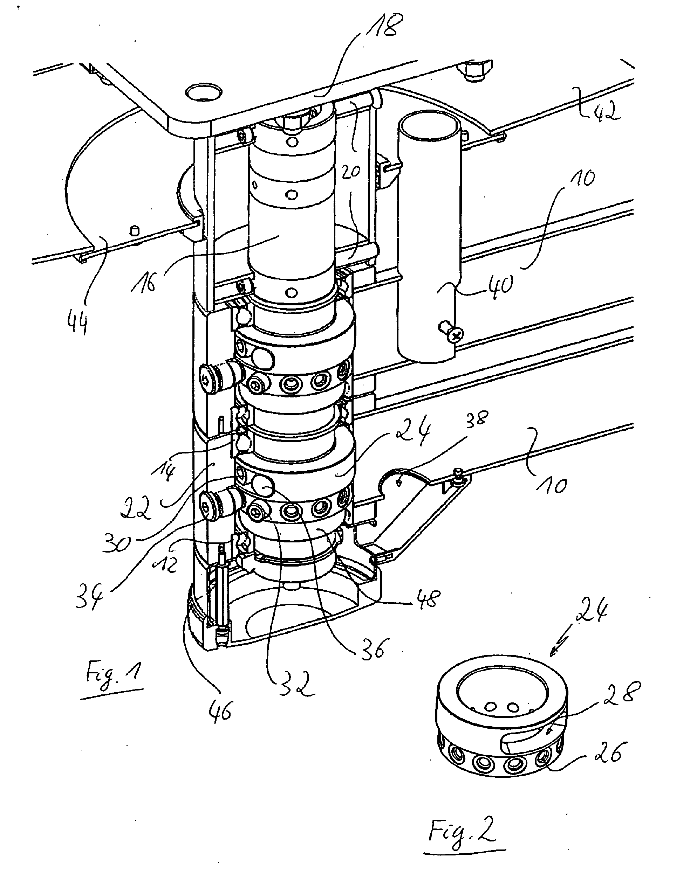

Fig. 1 zeigt eine Aufhängung für zwei (nicht dargestellte) Operationsleuchten, die jeweils am äußeren Ende eines Auslegers 10 befestigt sind. Der Ausleger 10 ist über zwei Kugellager 12 und 14 auf einem Halteelement in Form eines hohlen Schaftes 16 drehbar befestigt, wobei der Schaft 16 mit einem Montageflansch 18 über zwei Schraubbolzen 20 verschraubt ist.

An dem in Fig. 1 erkennbaren Ende des Auslegers 10 ist dieser mit einem sich in Umfangsrichtung erstreckenden Gehäuse 22 versehen, das den Schaft 16 sowie die beiden Kugellager 12 und 14 umgibt. Ferner ist innerhalb des Gehäuses 22 ein Koppelelement in Form eines Drehrings 24 aufgenommen, der auf den Schaft 16 frei drehbar aufgesteckt ist und der somit unabhängig von dem Ausleger 10 bzw. dem Gehäuse 22 um den Schaft 16 drehbar ist.

Der Drehring 24 ist in Fig. 2 gesondert dargestellt und weist in seinem unteren Bereich entlang seines Umfangs beim dargestellten Ausführungsbeispiel insgesamt zwölf um jeweils 30° in Umfangsrichtung voneinander beabstandete Bohrungen 26 auf. In seinem oberen Bereich ist der Drehring 24 mit einem sich in Umfangsichtung erstreckenden Fenster 28 versehen, dessen Erstreckung in Umfangsrichtung etwa 65° beträgt.

Wie Fig. 1 verdeutlicht, ist durch das Fenster 28 des Drehrings 24 ein Schraubbolzen 30 mit dem Schaft 16 verschraubt, wobei der Schraubbolzen 30 als ortsfester Endanschlag für den Ausleger 10 dient. In eine der Bohrungen 26 des Drehrings 24 ist beim dargestellten Ausführungsbeispiel ferner ein weiterer Schraubbolzen 32 verschraubt, der als positionsvariables Sperrelement für den Ausleger 10 bzw. das mit diesem verbundene Gehäuse 22 dient. In der Außenwandung des Gehäuses 22 ist nämlich eine einzige Durchgangsbohrung vorgesehen, durch die eine Sperrschraube 34 geschraubt ist, deren vorderes Ende sich bis in den Bereich des Außenumfangs des Drehrings 24 erstreckt, so dass bei einer vollständigen Drehung des Auslegers 10 um den Schaft 16 die Sperrschraube 34 an dem Schraubbolzen 32 anschlagen kann.

Um das Anschlagen des Auslegers 10 an seinem Endanschlag 30 zu dämpfen, sind ferner in dem Fenster 28 zwei Stoßdämpfer 36 (in Fig. 1 ist nur der rechte Stoßdämpfer 36 zu erkennen) vorgesehen, die zu beiden Seiten des als Anschlag dienenden Schraubbolzens 30 angeordnet sind. Die beiden Stoßdämpfer 36 sind zylinderstumpfförmig ausgebildet und aus elastischem Vollmaterial herstellt, das gummiähnliche Dämpfungseigenschaften aufweist.

Die Verdrehsicherung der dargestellten Aufhängung funktioniert wie folgt: Wenn der Ausleger 10 um den Schaft 16 entgegen dem Uhrzeigersinn verschwenkt wird, kann sich dieser so lange drehen, bis die Sperrschraube 34 in die in Fig. 1 dargestellte Position gelangt, in der diese sich dem Schraubbolzen 32 annähert, der in einer Bohrung 26 des Drehrings 24 verschraubt ist. Nachdem die Sperrschraube 34 an dem Schraubbolzen 32 angeschlagen ist, bewegt sich der Drehring 24 zusammen mit dem Ausleger 10 entgegen dem Uhrzeigersinn bis der in Fig. 1 nicht erkennbare linke Stoßdämpfer 36 an dem Anschlag 30 anschlägt. Hierbei wird der entstehende Stoß durch den Stoßdämpfer gedämpft und nicht auf den Schaft 16 bzw. den Montageflansch 18 übertragen. Wenn der Ausleger 10 im Uhrzeigersinn gedreht wird, so ist dies so lange möglich, bis die Sperrschraube 34 sich in Fig. 1 von rechts dem Schraubbolzen 32 nähert und an diesem anschlägt. Anschließend bewegt sich der Drehring 24 ebenfalls im Uhrzeigersinn und wiederum so lange bis der in Fig. 1 erkennbare Stoßdämpfer 36 an der Sperrschraube 34 anschlägt.

Mit dem vorstehend beschriebenen Ausführungsbeispiel, bei dem nur ein einziger Schraubbolzen 32 in den Drehring 24 eingeschraubt ist, lässt sich ein Schwenkbereich des Auslegers von annähernd 360° erreichen. Es ist leicht verständlich, dass durch Einschrauben von zwei Schraubbolzen 32 in den Drehring 24 ein entsprechend verringerter Schwenkbereich erzielt werden kann.

Die nicht dargestellten elektrischen Zuleitungen der Operationsleuchte werden durch das Innere des hohlen Auslegers 10 geführt und gelangen von dort durch eine Öffnung 38 zur Unterseite des nach unten offenen Schaftes 16 und können anschließend durch den Schaft 16 bis in den Bereich des Montageflanschs 18 geführt werden.

Weiterhin sind bei dem dargestellten Ausführungsbeispiel insgesamt zwei Schwenkarme 10 vorgesehen, deren Aufhängen identisch ausgeführt ist. Insofern wird die detaillierte Beschreibung der Aufhängung des oberen Schwenkarmes 10 nicht wiederholt. Um die elektrischen Zuleitungen der an dem oberen Schwenkarm 10 befestigten Operationsleuchte in den Bereich der Deckenaufhängung führen zu können, ist in den oberen Schwenkarm 10 ein Rohrstutzen 40 eingeführt, der sich bis in den Bereich einer an der Decke vorgesehenen Abdeckung 42 erstreckt. Da sich der Rohrstutzen 40 zusammen mit dem Schwenkarm 10 um den Schaft 16 dreht, ist im Bereich der Abdeckung 42 eine zusammen mit dem Rohrstutzen 40 verdrehbare Schwenkabdeckung 44 vorgesehen, die an der Abdeckung 42 abgedichtet anliegt. Ebenso ist an der Unterseite des unteren Gehäuses 22 ein Deckel 46 angeschraubt, der sich zusammen mit dem Schwenkarm 10 verdrehen kann. Das Bezugszeichen 48 bezeichnet einen fest mit dem Schaft 16 verbundenen Bremsring.

### Bezugszeichenliste

- 10: Ausleger
- 12, 14: Kugellager
- 16: Schaft
- 18: Montageflansch
- 20: Schraubbolzen
- 22: Gehäuse
- 24: Drehring
- 26: Bohrungen
- 28: Fenster
- 30: Schraubbolzen
- 32: Schraubbolzen
- 34: Sperrschraube
- 36: Stoßdämpfer
- 38: Öffnung
- 40: Rohrstutzen
- 42: Abdeckung
- 44: Schwenkabdeckung
- 46: Deckel
- 48: Bremsring

## Patentansprüche

1. Aufhängung für ein Gerät, insbesondere eine Operationsleuchte, mit einem Halteelement (16), an dem zumindest ein Ausleger (10) drehbar befestigt ist, wobei ein unabhängig von dem Ausleger (10) um das Halteelement (16) drehbares Koppelelement (24) vorgesehen ist, das einerseits mit dem Ausleger (10) und andererseits mit einem an dem Halteelement vorgesehenen Anschlag (30) in Eingriff treten kann,
**dadurch gekennzeichnet dass**
das Koppelelement ein Drehring (24) ist, der an seiner Mantelfläche mit einem Fenster (28) versehen ist, in das der Anschlag (30) hineinragt, um eine Drehung des Auslegers um das Halteelement um mehr als 360° zu verhindern.

2. Aufhängung nach Anspruch 1,
**dadurch gekennzeichnet, dass**
in dem Fenster (28) zu beiden Seiten des Anschlags (30) ein Stoßdämpfer (36) vorgesehen ist.

3. Aufhängung nach zumindest einem der vorstehenden Ansprüche,
**dadurch gekennzeichnet, dass**
das Koppelelement (24) ein positionsvariables Sperrelement (32) aufweist, über welches das Koppelelement (24) mit dem Ausleger (10) in Eingriff tritt.

4. Aufhängung nach Anspruch 3,
**dadurch gekennzeichnet, dass**
das Koppelelement (24) über dessen Umfang gleichmäßig beabstandete Aufnahmen (26) für das Sperrelement (32) aufweist.

5. Aufhängung nach Anspruch 2,
**dadurch gekennzeichnet, dass**
der Stoßdämpfer (36) ein Körper aus elastischem Material ist.

6. Aufhängung nach zumindest einem der vorstehenden Ansprüche,
**dadurch gekennzeichnet, dass**
das Halteelement ein hohler Schaft (16) ist.

7. Aufhängung nach zumindest einem der vorstehenden Ansprüche,
**dadurch gekennzeichnet, dass**
der Ausleger ein das Halteelement umgebendes Gehäuse (22) aufweist, das mit Ausnahme einer Bohrung für eine Schraube (34) vollständig geschlossen ist, wobei insbesondere eine in der Bohrung befindliche Schraube als Sperrelement (34) für den Ausleger (10) dient.

8. Aufhängung nach Anspruch 7,
**dadurch gekennzeichnet, dass**
das Koppelelement (24) vollständig in dem Gehäuse (22) aufgenommen ist.

## Claims

1. A suspension for a device, in particular for a surgical light, having a holding element (16) to which at least one arm (10) is rotatably fastened, wherein a coupling element (24) is provided which is rotatable around the holding element (16) independently of the arm (10) and which can enter into engagement with the arm (10), on the one hand, and with an abutment (30) provided at the holding element, on the other hand,
**characterized in that**
the coupling element is a rotatable ring (24) which is provided at its jacket surface with a window (28) into which the abutment (30) projects, to prevent a rotation of the arm around the holding element by more than 360°.

2. A suspension in accordance with claim 1,
**characterized in that**
a damping element (36) is provided in the window (28) at both sides of the abutment (30).

3. A suspension in accordance with at least one of the preceding claims,
**characterized in that**
the coupling element (24) has a variable position blocking element (32) via which the coupling element (24) comes into engagement with the arm (10).

4. A suspension in accordance with claim 3,
**characterized in that**
the coupling element (24) has receivers (26) for the blocking element (32) spaced apart uniformly over its periphery.

5. A suspension in accordance with claim 2,
**characterized in that**
the damping element (36) is a body of elastic material.

6. A suspension in accordance with at least one of the preceding claims,
**characterized in that**
the holding element is a hollow shaft (16).

7. A suspension in accordance with at least one of the preceding claims,
**characterized in that**
the arm has a housing (22) which surrounds the holding element and which is fully closed with the exception of a bore for a screw (34), with in particular a screw located in the bore serving as a blocking element (34) for the arm (10).

8. A suspension in accordance with claim 7,
**characterized in that**
the coupling element (24) is completely received in the housing (22).

## Revendications

1. Suspension pour un appareil, en particulier pour une lampe d'opération, comprenant un élément de maintien (16) sur lequel au moins un bras (10) est fixé avec faculté de rotation, et il est prévu un élément d'accouplement (24) rotatif autour de l'élément de maintien (16) indépendamment du bras (10), élément d'accouplement qui est capable de venir en engagement d'une part avec le bras (10) et d'autre part avec une butée (30) prévue sur l'élément de maintien, **caractérisée en ce que** l'élément d'accouplement est une bague rotative (24) qui est dotée au niveau de sa surface enveloppe d'une fenêtre (28) dans laquelle pénètre la butée afin de d'empêcher une rotation du bras autour de l'élément de maintien sur plus de 360°.

2. Suspension selon la revendication 1,
**caractérisée en ce qu'**il est prévu un amortisseur de choc (36) dans la fenêtre (28) sur les deux côtés de la butée (30).

3. Suspension selon l'une au moins des revendications précédentes,
**caractérisée en ce que** l'élément d'accouplement (24) comprend un élément de blocage (32) variable en position, via lequel l'élément d'accouplement (24) vient en engagement avec le bras (10)

4. Suspension selon la revendication 3,
**caractérisée en ce que** l'élément d'accouplement (24) comporte des logements (24) pour l'élément de blocage (32), répartis régulièrement sur sa périphérie.

5. Suspension selon la revendication 2,
**caractérisée en ce que** l'amortisseur de choc (36) est un corps en matériau élastique.

6. Suspension selon l'une au moins des revendications précédentes,
**caractérisée en ce que** l'élément de maintien est un arbre creux (16).

7. Suspension selon l'une au moins des revendications précédentes,
**caractérisée en ce que** le bras comprend un boîtier (22) qui entoure l'élément de maintien et qui, à l'exception d'un perçage pour une vis (34), est entièrement fermé, et en particulier une vis qui se trouve dans le perçage sert d'élément de blocage (34) pour le bras (10).

8. Suspension selon la revendication 7,
**caractérisée en ce que** l'élément d'accouplement (24) est reçu entièrement dans le boîtier (22).
